# EUROPÄISCHE PATENTANMELDUNG

(11) **EP 0 671 577 A1**
(43) Veröffentlichungstag der Anmeldung: **13.09.1995**
(21) Anmeldenummer: 95102646.7
(22) Anmeldetag: 24.02.1995
(51) Int. Cl.: F16K 3/06, F16K 3/02

(54) **Ausblaseinheit für Absperrschieber in Rohrleitungen**

(30) Priorität: 03.03.1994 DE 9403603 U
(71) Anmelder: P+S ARMATUREN GmbH, 66482 Zweibrücken (DE)
(72) Erfinder: Schmitt, Hilmar, D-66482 Zweibrücken (DE)
(74) Vertreter: Patentanwälte Möll und Bitterich

(57) **Zusammenfassung**

Gegenstand der Erfindung sind Ausblaseinheiten für Absperrschieber in Rohrleitungen. In einem Gehäuse (11), bestehend aus einer Bodenplatte (11.1) und einem Gehäuseoberteil (11.2), ist eine Dichtplatte (13) mit einer Durchgangsöffnung (16) schwenkbar gelagert. An die Dichtplatte (13) werden die Stirnflächen (18) zweier Dichtringe (17) angedrückt. Diese besitzen in ihrer an der Dichtplatte (13) anliegenden Stirnfläche (18) eine Ringnut, in die ein O-Ring (20) optimal gegen Beschädigungen geschützt eingelegt ist. Ein zweiter O-Ring (21) in einer axial und radial offenen Ringnut dichtet die Dichtringe (17) gegen das Gehäuse (11) ab. Diese Konstruktion ist ölfrei. Anpreßkräfte und Verschleiß sind minimal. Die Schwenkachse (14) der Schwenkplatte (13) dient gleichzeitig als Betätigungswelle (15).

## Beschreibung

Die Erfindung betrifft Ausblaseinheiten gemäß dem Oberbegriff des Anspruchs 1 für Absperrschieber in Rohrleitungen.

Ausblaseinheiten sind seit Jahrzehnten in großen Stückzahlen in Gebrauch. Beispielhaft sei verwiesen auf den Aufsatz "Schieber-Ausbläser-Einheit als Fertigteil für Gasleitungen aller Druckstufen" in der DE-Zeitschrift "3 R international", Heft 8, Oktober 1989. Dieser Aufsatz befaßt sich mit den sehr positiven Eigenschaften von sogenannten Dreiplattenschiebern zum Absperren von Gasrohrleitungen, die mit ein oder zwei Ausblaseinheiten kombiniert sind. Bei den Ausblaseinheiten handelt es sich um Absperrschieber kleiner Nennweite, deren Zuströmseite über eine kurze Rohrleitung mit den Anschlußrohrstutzen des Dreiplattenschiebers verbunden ist, während abströmseitig ein Ausblasstutzen direkt ins Freie mündet.

Ausblaseinheiten werden überwiegend in Gas- und Wasserrohrnetzen eingesetzt, die mit eindeutigem Gefälle verlegt sind. Sie gestatten die Entlüftung der Rohrleitung bei Inbetriebnahme sowie die Entleerung bei Revisionsarbeiten oder Außerbetriebnahme. Durch geschickte Kombination von Dreiplattenschieber und Ausblaseinheiten war es möglich, diese unter einer einzigen Straßenkappe unterzubringen, was die Straßenbau- und -unterhaltungskosten erheblich senken konnte.

Die Ausblaseinheiten sind üblicherweise als Einplattenschieber ausgebildet, wobei wegen der vereinfachten Betätigung eine waagerecht liegende Schwenkplatte mit einer Durchgangsöffnung als Absperrelement verwendet wird. Auf die Schwenkplatte drücken von oben und unten Druckplatten, deren Stirnflächen mit Hilfe von starken Federpaketen an die Schwenkplatte angepreßt werden. Abdichtend wirkt ein hauchdünner Ölfilm zwischen den metallischen Oberflächen. Um diese Abdichtung über Jahrzehnte sicherzustellen, wird das Gehäuse komplett mit Öl gefüllt.

Da der Ölfilm kleinste Gasmengen durchkriechen läßt, baut sich im Gehäuse langam der in der Leitung anstehende Druck auf. Durch die Summe von Gas- und Federdruck wird die Schwenkplatte gegen die abströmseitige Druckplatte gepreßt. Dadurch werden deren Druckfedern mehr gespannt, wodurch die Dichtwirkung, aber auch der Verschleiß zunehmen. Die handelsüblichen Konstruktionen dichten somit ausgangsseitig.

Die Betätigung der Schwenkplatte erfolgt derzeit mit Hilfe eines Vierkantschlüssels, der auf eine durch das Gehäuse der Ausblaseinheit durchgeführte Betätigungswelle aufgesteckt wird. Infolge des hohen Anpreßdrucks ist die Schwenkplatte so schwergängig, daß zwischen Betätigungswelle und Schwenkplatte ein Untersetzungsgetriebe angeordnet sein muß. Die Betätigungswelle ist dazu mit einer Außenverzahnung, die Schwenkplatte mit einer Innenverzahnung ausgerüstet.

Ausgehend von diesem Stand der Technik liegt der vorliegenden Erfindung die Aufgabe zugrunde, eine zur Kombination mit Absperrschiebern für Rohrleitungen geeignete Ausblaseinheit der eingangs genannten Art anzugeben, die nur einem geringen Verschleiß unterliegt und nur geringe Betätigungskräfte benötigt.

Diese Aufgabe wird gelöst durch eine Ausblaseinheit mit den Merkmalen des Anspruchs 1.

Auch bei der erfindungsgemäßen Ausblaseinheit besteht zwischen Schwenkplatte und Dichtring metallischer Kontakt; die eigentliche Abdichtung übernimmt jedoch der in eine stirnseitige Ringnut eingesetzte O-Ring, der auf diese Weise optimal gegen Überlastung und Verschleiß geschützt ist. Die Abdichtung des Dichtstutzens gegen das Gehäuse übernimmt ein zweiter O-Ring. Da hier keine rein metallische Abdichtung vorliegt, kann auf eine Ölfüllung des Gehäuses verzichtet werden.

Gemäß einer vorteilhaften Ausgestaltung der Erfindung sitzt der zweite O-Ring in einer entweder axial oder radial offenen Ringnut des Dichtrings oder des Gehäuses. Auf diese Weise wird auch der zweite O-Ring gegen Beschädigung geschützt. Außerdem wird die Montage erleichtert.

Besonders bevorzugt ist jedoch eine Ausführungsform, bei der der zweite O-Ring in einer sowohl axial als auch radial offenen Ringnut des Dichtrings sitzt. Auf diese Weise wird der Dichtring sowohl gegen das Gehäuse abgedichtet als auch axial gegen die Schwenkplatte angepreßt. Die größten Vorteile stellen sich ein, wenn beide Dichtringe gleich ausgebildet sind. Besondere Federpakete sind entbehrlich, wodurch die Konstruktion erheblich vereinfacht und verbilligt wird, ohne daß Funktion und Lebensdauer darunter leiden.

Dank der durch die erfindungsgemäße Konstruktion erreichten Reduzierung der Anpreßkräfte ist die Schwenkplatte erheblich leichtgängiger geworden. Aus diesem Grunde können Betätigungswelle und Schwenkachse einteilig ausgebildet werden. Dies führt zu einer weiteren Vereinfachung und Verbilligung der Konstruktion.

Eine weitere Reduzierung der Betätigungskräfte und des Verschleißes läßt sich erreichen, wenn die Oberflächen der Schwenkplatte und/oder der Dichtringe verschleißfest und/oder gleitfähig beschichtet sind.

Gemäß einer bevorzugten Ausgestaltung der Erfindung ist das Gehäuse der Ausblaseinheit kreisförmig. Die Schwenkachse einerseits und der Auslaßstutzen andererseits sind darin exzentrisch positioniert. Diese Anordung hat sich schon bei den herkömmlichen Konstruktionen bewährt und eignet sich in gleicher Weise auch für die erfindungsgemäße Konstruktion.

Gemäß einer vorteilhaften Weiterbildung der Erfindung ist die Ausblaseinheit mit einem Absperrschieber als Hauptschieber kombiniert, wobei die einteilige Bodenplatte der Ausblaseinheit gleichzeitig die Deckelplatte des Hauptschiebers bildet. Auf diese Weise ergibt sich eine kompakte und stabile Schieber-Ausbläser-Einheit als Fertigbauteil für Wasser- und Gasleitungen aller Druckstufen.

Es versteht sich, daß auch bei der Konstruktion des Hauptschiebers selbst die schon bei der Ausblaseinheit verwirklichten neuen und vorteilhaften Konstruktionsideen realisiert werden können. Hierzu besitzt gemäß einer vorteilhaften Ausgestaltung der Erfindung der Hauptschieber eine heb- und senkbare Schieberplatte mit Durchgangsöffnung und zwei mittels O-Ringen gegen die Schieberplatte einerseits und das Hauptschiebergehäuse bzw. in dieses eingeschweißte Anschlußrohrstutzen andererseits abgedichtete Dichtringe. Auch hier können die Dichtringe nur mit Hilfe der von dem geeignet dimensionierten O-Ring erzeugten Kraft an die Schieberplatte angedrückt werden, so daß auch im Hauptschieber selbst besondere Federpakete entfallen. Dank des geringeren Anpreßdrucks wird auch die Schieberplatte leichtgängiger und unterliegt einem nur geringen Verschleiß.

Anhand der Zeichnung soll die Erfindung in Form von Ausführungsbeispielen näher erläutert werden. Es zeigen
- Fig. 1: einen Längsschnitt durch eine erste Ausblaseinheit,
- Fig. 2: einen Querschnitt durch die Ausblaseinheit der Fig. 1,
- Fig. 3: einen Längsschnitt durch eine zweite Ausblaseinheit und
- Fig. 4: eine teilweise aufgebrochene Ansicht eines Hauptschiebers mit zwei integrierten Ausblaseinheiten in der Einbausituation unter eine Straße.

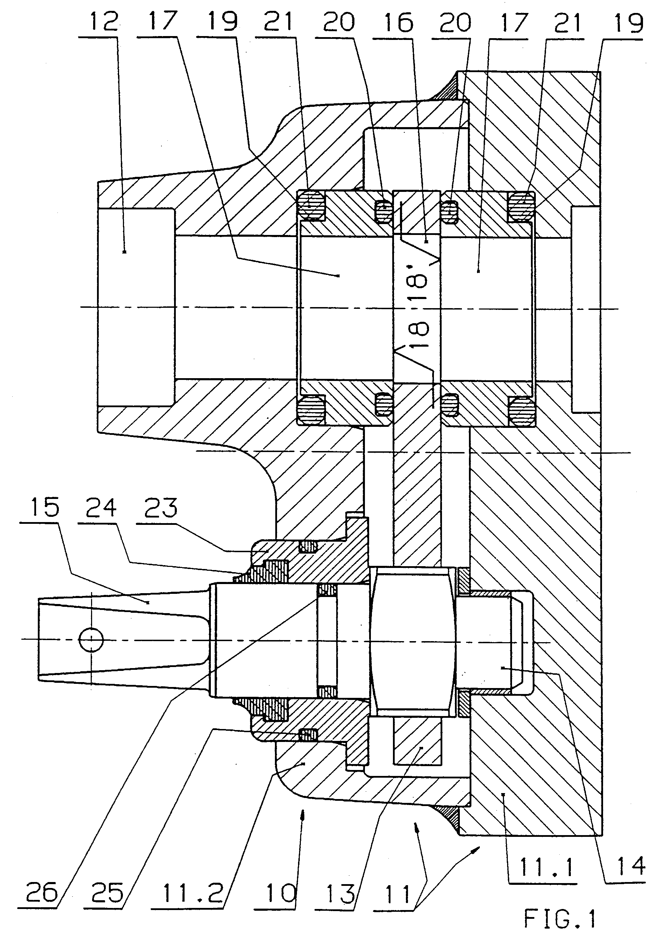

Fig. 1 zeigt eine Ausblaseinheit 10, deren Gehäuse 11 aus einer Bodenplatte 11.1 und einem Gehäuseoberteil 11.2 geschweißt ist. Im Inneren des Gehäuses 11 erkennt man als Absperrorgan eine Schwenkplatte 13 mit einer Durchgangsöffnung 16. Die Schwenkplatte 13 ist um eine Schwenkachse 14 schwenkbar.

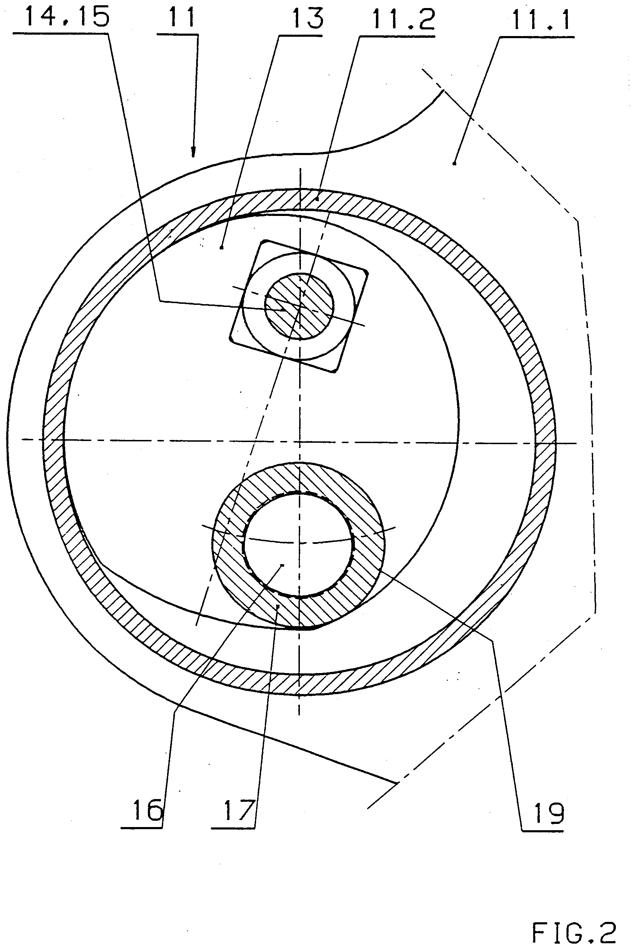

Wie Fig. 2 erkennen läßt, besitzt das Gehäuse 11 einen kreisförmigen Querschnitt. Die Schwenkachse 14 einerseits und die Durchgangsöffnung 16 andererseits sind darin exzentrisch positioniert, wodurch eine platzsparende Anordnung erreicht wird.

Fig. 1 läßt weiterhin erkennen, daß im Bereich der Durchgangsöffnung 16 oberhalb und unterhalb der Schwenkplatte 13 metallische Dichtringe 17 montiert sind. Diese sitzen längsbeweglich in Vertiefungen der Bodenplatte 11.1 bzw. des Gehäuseoberteils 11.2. In die die Schwenkplatte berührende Stirnfläche 18 ist jeweils eine Ringnut eingearbeitet, in die ein erster O-Ring 20 eingesetzt ist. Dieser ist für die Abdichtung zwischen Dichtring 17 und Schwenkplatte 13 verantwortlich. Durch seine Position in der Ringnut ist er optimal gegen Überlastung und Verschleiß geschützt, was seiner Lebensdauer zugute kommt. Diese Konstruktion dichtet eingangsseitig und ausgangsseitig.

Die Abdichtung zwischen Dichtring 17 und Bodenplatte 11.1 bzw. Gehäuseoberteil 11.2 übernimmt ein zweiter O-Ring 21. Dieser sitzt in einer sowohl axial als auch radial offenen Ringnut 19 des Dichtrings 17. Auf diese Weise ist er gegen Überlastung geschützt. Gleichzeitig wird eine ausreichende Pressung erzielt, die für eine einwandfreie Abdichtung sorgt.

Ist der zweite O-Ring 21 richtig dimensioniert, so ist er in der Lage, den nötigen Anpreßdruck zwischen Dichtring 17 und Schwenkplatte 13 zu erzeugen. Dadurch können Federpakete, wie sie bei den herkömmlichen Konstruktionen eingesetzt werden, völlig entfallen.

Fig. 1 zeigt schließlich, daß die Schwenkachse 14 identisch ist mit der Betätigungswelle 15. Die Schwenkplatte 13 ist somit direkt angetrieben, was dank der geringen Anpreßkräfte der Dichtringe 17 problemlos möglich ist. Die Abdichtung der Betätigungswelle 15 erfolgt mittels Abstreifring 24 und O-Ring 26 gegen eine in das Gehäuseoberteil 11.2 eingesetzte Buchse 23, die ihrerseits mittels O-Ring 25 gegen das Gehäuseoberteil 11.2 abgedichtet ist.

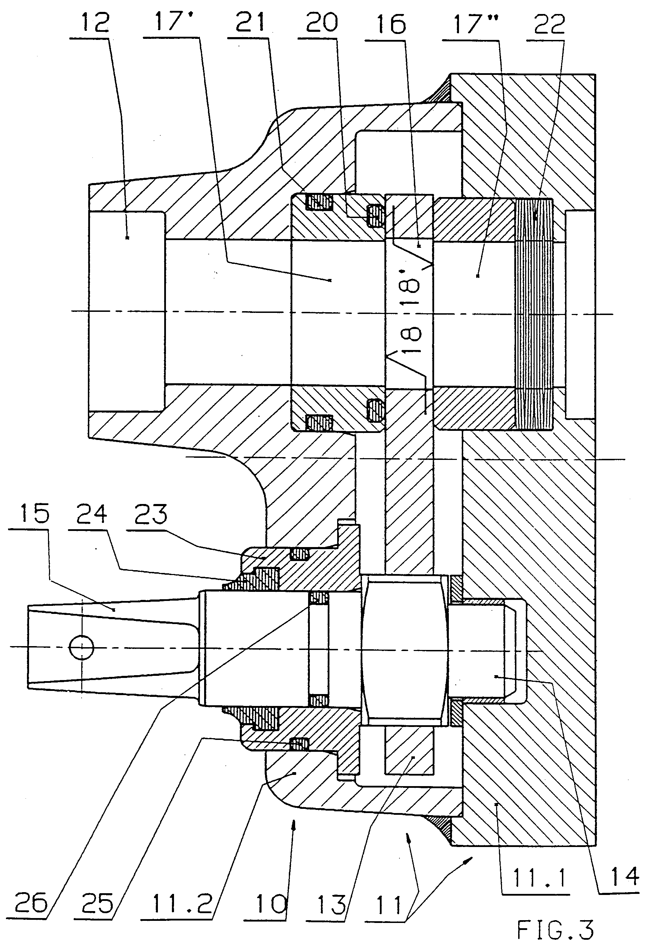

Fig. 3 zeigt eine Ausblaseinheit 10 mit abgeänderten Dichtringen 17', 17''. Der obere Dichtring 17' besitzt eine stirnseitige Ringnut mit eingelegtem erstem O-Ring 20, der die Abdichtung zur Schwenkplatte 13 bewirkt. Der zweite O-Ring 21 sitzt hier jedoch in einer radial offenen Ringnut.

Der untere Dichtring 17'' wird in an sich bekannter Weise mittels eines starken Federpaketes 22 mit seiner Stirnfläche 18' direkt an die Schwenkplatte 13 angepreßt. Da rein metallische Dichtflächen nicht gasdicht sind, baut sich im Inneren des Gehäuses 11 ein Druck auf. Die Abdichtung wird nur von den auf der Abströmseite angeordneten O-Ringen 20, 21 gewährleistet. Diese Konstruktion dichtet nur ausgangsseitig.

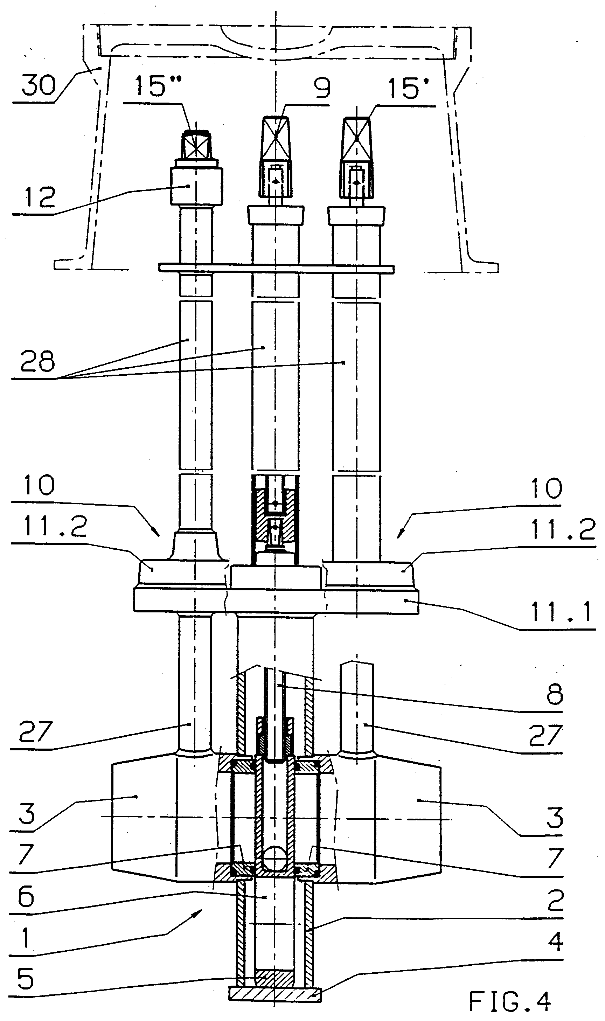

Fig. 4 zeigt die Einbausituation eines mit zwei Ausblaseinheiten 10 kombinierten Absperrschiebers 1 unter einer Straßenkappe 30. Der Absperrschieber 1 besitzt ein aus einem Rohrstück hergestelltes Gehäuse 2, das unten mittels Bodenplatte 4 und oben mittels Deckelplatte geschlossen ist. In die Seitenwände des Gehäuses 2 sind zwei Anschlußrohrstutzen 3 eingeschweißt. Verbindungsrohrstücke 27 verbinden die Anschlußrohrstutzen 3 mit den Ausblaseinheiten 10.

Im Inneren des Gehäuses 2 des Absperrschiebers 1 erkennt man eine mittels einer Gewindespindel 8 heb- und senkbare Schieberplatte 5 mit Durchgangsöffnung 6. Die Schieberplatte 5 befindet sich in Schließstellung. In Ausdrehungen der Anschlußrohrstutzen 3 sind Dichtringe 7 eingesetzt, die in gleicher Weise mittels O-Ringen abgedichtet und angedrückt sind, wie es anhand der Fig. 1 bei den Dichtringen 17 der Ausblaseinheit 10 beschrieben wurde. Damit werden auch für den Absperrschieber 1 dieselben vorteilhaften Eigenschaften hinsichtlich Betätigungskraft, Verschleiß und Lebensdauer erreicht.

Auf den mit den Ausblaseinheiten 10 kombinierten Absperrschieber 1 ist eine Einbaugarnitur 28 aufgesetzt, die unter der Straßenkappe 30 endet, so daß die Betätigungsvorrichtungen 9, 15' sowie die Verschlußschraube 15'' bequem von oben zu erreichen sind.

## Patentansprüche

1. Ausblaseinheit (10) für Absperrschieber in Rohrleitungen, umfassend ein Gehäuse (11) mit einem Ausblasstutzen (12), eine Schwenkplatte (13) mit einer Schwenkachse (14), einer Betätigungswelle (15) und einer Durchgangsöffnung (16) sowie zwei längsbeweglich in das Gehäuse (11) eingesetzen Dichtringe (17, 17', 17''), deren eine Stirnfläche (18) federnd an die Schwenkplatte (13) angedrückt ist, dadurch gekennzeichnet, daß das Gehäuse (11) eine Bodenplatte (11.1) und ein Gehäuseoberteil (11.2) umfaßt, daß wenigstens einer der Dichtringe (17, 17') in seiner an der Schwenkplatte (13) anliegenden Stirnfläche (18) eine Ringnut besitzt, daß in die Ringnut ein erster O-Ring (20) eingelegt ist und daß ein zweiter O-Ring (21) den Dichtring (17, 17') gegen das Gehäuse (11) abdichtet.

2. Ausblaseinheit nach Anspruch 1, dadurch gekennzeichnet, daß der zweite O-Ring (21) in einer axial oder radial offenen Ringnut des Dichtrings (17') oder des Gehäuses (11) sitzt.

3. Ausblaseinheit nach Anspruch 1 oder 2, dadurch gekennzeichnet, daß der zweite O-Ring (21) in einer axial und radial offenen Ringnut (19) des Dichtrings (17) sitzt.

4. Ausblaseinheit nach Anspruch 1, 2 oder 3, dadurch gekennzeichnet, daß Betätigungswelle (15) und Schwenkachse (14) einteilig ausgebildet sind.

5. Ausblaseinheit nach einem der Ansprüche 1 bis 4, dadurch gekennzeichnet, daß die Dichtflächen von Schwenkplatte (13) und Dichtringen (17, 17', 17'') verschleißfest und/oder gleitfähig beschichtet sind.

6. Ausblaseinheit nach einem der Ansprüche 1 bis 5, dadurch gekennzeichnet, daß das Gehäuse (11) einen kreisförmigen Querschnitt besitzt, in dem die Schwenkachse (14) einerseits und der Ausblasstutzen (12) andererseits exzentrisch positioniert sind.

7. Ausblaseinheit nach einem der Ansprüche 1 bis 6, die mit einem Absperrschieber (1) als Hauptschieber kombiniert ist, dadurch gekennzeichnet, daß die einteilige Bodenplatte (11.1) gleichzeitig die Deckelplatte des Hauptschiebergehäuses (2) bildet.

8. Ausblaseinheit nach Anspruch 7, dadurch gekennzeichnet, daß der Hauptschieber (1) eine heb- und senkbare Schieberplatte mit Durchgangsöffnung und zwei mittels O-Ringen gegen die Schieberplatte einerseits und das Hauptschiebergehäuse (2) bzw. in dieses eingeschweißte Anschlußrohrstutzen (3) andererseits abgedichtete Dichtringe aufweist.
